# EUROPÄISCHE PATENTSCHRIFT

(11) **EP 2 596 214 B1**
(45) Veröffentlichungstag und Bekanntmachung des Hinweises auf die Patenterteilung: **14.12.2016**
(21) Anmeldenummer: 11733594.3
(22) Anmeldetag: 14.07.2011
(51) Int. Cl.: B23K 35/36, B23K 35/02, B23K 26/34, B23K 26/32, B23K 103/00, B23K 103/16, B23K 101/00, F01D 5/28, F01D 5/00, B23P 6/00

(54) **VERFAHREN ZUR REPARATUR VON GASTURBINENBAUTEILEN AUS KERAMISCHEN VERBUNDWERKSTOFFEN UND VORRICHTUNG ZUR DURCHFÜHRUNG DES VERFAHRENS**
METHOD FOR REPAIRING GAS TURBINE COMPONENTS OF CERAMIC COMPOSITE MATERIALS AND DEVICE FOR CARRYING OUT THE METHOD
PROCÉDÉ DE RÉPARATION D'ÉLÉMENTS STRUCTURAUX EN MATÉRIAU COMPOSITE CÉRAMIQUE D'UNE TURBINE À GAZ ET DISPOSITIF DE MISE EN OEUVRE DU PROCÉDÉ

(30) Priorität: 20.07.2010 DE 102010031795
(43) Veröffentlichungstag der Anmeldung: 29.05.2013
(73) Patentinhaber: Lufthansa Technik AG, 22335 Hamburg (DE)
(72) Erfinder: CZERNER, Stefan, 22767 Hamburg (DE)
(74) Vertreter: Müller Verweyen
(86) Internationale Anmeldenummer: PCT/EP2011/003515
(87) Internationale Veröffentlichungsnummer: WO 2012/019684

(56) Entgegenhaltungen:
- EP-A1- 0 480 552
- EP-A1- 1 559 499
- EP-A1- 1 930 098
- EP-A2- 1 533 396
- WO-A1-2008/098614
- DE-A1-102006 058 949
- US-B1- 6 238 743
- US-B2- 6 820 334

## Beschreibung

Die vorliegende Erfindung betrifft ein Verfahren zur Reparatur eines Gasturbinenbauteils, welches zumindest an der zu reparierenden Stelle aus einem keramischen Verbundwerkstoff besteht, und eine Vorrichtung zur Durchführung eines solchen Verfahrens.

EP 1 533 396 A2 offenbart ein Verfahren zum Reparieren eines Gasturbinenbauteils durch Beschichten mit einer keramischen Wärmesperrbeschichtung (Thermal Barrier Coating, TBC) beispielsweise mittels Electron Beam Physical Vapor Deposition (EB-PVD).

US 6 238 743 B1 offenbart ein Verfahren zum Entfernen einer beispielsweise mittels Electron Beam Physical Vapor Deposition (EB-PVD) erzeugten keramischen Wärmesperrbeschichtung (Thermal Barrier Coating, TBC) von einem Gasturbinenbauteil.

In Gasturbinen werden zukünftig vermehrt Keramikbauteile eingesetzt. Diese Bauteile machen mit höheren Gas- oder Bauteiltemperaturen bessere Effizienzen der Triebwerke möglich. Ein generelles Problem von keramischen Bauteilen ist jedoch, dass ihre Duktilität geringer als die von vergleichbaren Metallbauteilen ist. Damit einher geht eine geringe Risszähigkeit und dementsprechend eine hohe Bruchgefahr. Um diesem Problem entgegen zu wirken, können Keramiken verstärkt werden, beispielsweise durch Fasern oder Teilchen. Solche keramischen Verbundwerkstoffe, insbesondere Faserverbundwerkstoffe, auch CMC oder Faserkeramiken genannt, haben eine Reihe von Vorteilen. Gegenüber konventionellen technischen Keramiken weisen sie eine deutlich höhere Bruchdehnung, einen höheren Risswiderstand und eine sehr hohe Thermoschockbeständigkeit auf. Zusätzlich zu Fasern können alternativ auch Teilchen oder Partikel im Verbund mit Keramiken eingesetzt werden, um die z.B. Abrasionsfestigkeit, Thermoschockfestigkeit oder Bruchfestigkeit zu erhöhen. Generell sind sie aufgrund ihrer hohen Temperaturfestigkeit und ihrer geringen Dichte für diverse Anwendungen in der Luft- und Raumfahrt gut geeignet. Als Beispiele für verbreitete keramische Faserverbundwerkstoffe und Partikelverbundwerkstoffe können Kombinationen von Faser-/ Partikel-/ Matrixwerkstoffen aus folgenden Materialien und Kombinationen hiervon angeführt werden: Siliziumcarbid/Silizium, Siliziumcarbid/Siliziumnitrid, Siliziumcarbid/Kohlenstoff, Kohlenstoff/Kohlenstoff, Aluminiumoxid/Aluminium.

Problematisch ist die Reparatur von Bauteilen oder Bauteilbereichen aus keramischen Verbundwerkstoffen, da bisherige Reparaturverfahren viele Prozessschritte und aufwendige Ofenbehandlungen der zu reparierenden Bauteile erfordern.

Ein Reparaturverfahren für keramische Faserverbundwerkstoffe wird in der Patentschrift US 6 820 334 B2 vorgestellt. Um die Bauteile zu reparieren, werden zugeschnittene Streifen aus keramischen Faserverbundwerkstoffen neben einer vorbehandelten Reparaturstelle positioniert, das gesamte Bauteil anschließend in einem Vakuumbeutel autoklaviert und dann anschließend einer ersten Wärmebehandlung bei ca. 750°C und einer zweiten Wärmebehandlung bei ca. 1425°C in einem Vakuumofen unterzogen.

Ein anderer Ansatz ist aus EP 1 559 499 A1 bekannt. Hier wird das Bauteil aus einem keramischen Faserverbundwerkstoff erst mechanisch bearbeitet, um eine Mulde zu erzeugen oder die Matrix des Verbundwerkstoffs auszulaugen, um dann durch lokalen Wiederaufbau der keramischen Matrix plus Sintern und/oder Neuinfiltration durch CVD (Chemical Vapour Deposition) Verfahren bei 700°C bis 1100°C das Bauteil zu reparieren.

Beiden Verfahren ist gemein, dass ein Bauteilbereich mit einer Vielzahl von Prozessschritten bearbeitet werden muss. Dabei muss teilweise aufwendig Material vordeponiert werden, außerdem liegen in der Verarbeitung von Fasern und Zuschlagstoffen in einem Ofen, einer Form oder durch ein vordeponiertes Tape mehrere grundlegende Probleme: Das erste Problem ist, dass bei größeren Bauteilen auch entsprechend große Öfen vorhanden sein müssen, um eine Reparatur überhaupt zu ermöglichen. Bei kleinen Bauteilen ist die Ofengröße insofern ein Problem, da die kleinen Bauteile oft in großer Zahl vorhanden sind und dementsprechend zur Reparatur der vielen kleinen Bauteile in der Regel auch viele Ofenzyklen durchlaufen werden müssen, wobei dabei kaum auf individuelle Anforderungen (bspw. Temperaturen, Drücke, etc.) von allen Bauteilen eingegangen werden kann. Das zweite Problem ist, dass aufgrund der langen Wärmeeinflüsse von Schmelze oder Ofenwärme eine Gefahr der Zersetzung von Fasern und/oder Schädigung des zu reparierenden Bauteils und/oder Schädigung der Reparaturstelle besteht. Zusätzlich muss bei großflächigen Behandlungen eine erhebliche Spannung durch den thermischen Einfluss und die aufgebrachten Werkstoffe kompensiert werden. Des Weiteren sind Verfahren, die eine Gussform benötigen, insbesondere bei Freiformflächen des Gasturbinenbereichs, wie z.B. Airfoils, nur sehr bedingt einsetzbar, da individuelle Schädigungsmechanismen und individuelle Verformungen durch Herstellung und Betrieb eine extreme Menge an unterschiedlichen Vorformen nach sich ziehen. Da Gasturbinenbauteile einer Vielzahl von Einwirkungen durch korrosive Medien, oxidierende Atmosphären, hohe Temperaturen oder auch Fremdkörper ausgesetzt sind, sind Schädigungen der Bauteile nahezu unvermeidlich, was insbesondere im Hinblick auf die hohen Kosten der Neuteile, den Bedarf von wirtschaftlichen Reparaturverfahren begründet.

EP 0 480 552 A1 offenbart ein Verfahren zur Reparatur eines aus Faserverbundwerkstoff bestehenden Kunststoffbauteils mit einem polymeren Matrixwerkstoff.

Der Erfindung liegt daher die Aufgabe zugrunde, ein kostengünstiges Verfahren zur Reparatur von gattungsgemäßen Gasturbinenbauteilen und eine entsprechende Vorrichtung zur Durchführung des Verfahrens bereitzustellen.

Die Erfindung löst die Aufgabe durch ein Verfahren mit den Merkmalen des Anspruchs 1 und eine Vorrichtung mit den Merkmalen des Anspruchs 10.

Weitere bevorzugte Ausgestaltungen der Erfindung sind den Unteransprüchen und den zugehörigen Beschreibungen und Zeichnungen zu entnehmen.

Erfindungsgemäß wird zur Lösung der Aufgabe ein Verfahren zur Reparatur eines Gasturbinenbauteils vorgeschlagen, wobei das Gasturbinenbauteil zumindest an der zu reparierenden Stelle aus einem keramischen Verbundwerkstoff besteht, und bei dem durch einen Energiestrahl das Gasturbinenbauteil an einer Zone lokal erwärmt wird, und an dieser Zone ein oder mehrere Zusatzstoffe und Fasern und/oder Partikel zugeführt werden, wobei durch diesen Zusatzstoff bzw. diese Zusatzstoffe eine Keramik in der Schmelzzone geschaffen wird, die zusammen mit den zugeführten Fasern und/oder Partikeln einen keramischen Faserverbundwerkstoff bildet. Der erfindungsgemäße Anbindungsprozess von erzeugter zur im Bauteil vorliegenden Keramik ist dabei im Wesentlichen durch zwei Wege möglich, bei denen das Bauteil jeweils thermisch aktiviert wird. Der erste Weg umfasst das Anschmelzen der vorliegenden Keramik und Verbindung mit den zugeführten Werkstoffen. Dieser Weg ist aufgrund von möglicherweise auftretenden Schrumpfungen nur bei bestimmten Bauteilen geeignet. Der zweite Weg erfolgt über eine Erwärmungs-Benetzungs-Reaktion. Dabei umfasst die Verbindung an der Grenzfläche von vorliegendem Material zu zugeführtem Material drei Schritte. Im ersten Schritt wird eine Zone des Bauteils durch einen Energiestrahl oder die Schmelze der zugeführten Werkstoffe erwärmt. Im zweiten Schritt erfolgt die Benetzung der vorliegenden Keramikgrenzfläche durch die zugeführten Werkstoffe, beispielsweise durch schmelzflüssiges Silizium oder Aluminium. Im dritten Schritt erfolgt eine teilweise oder vollständige Reaktion der Metallschmelzen zu Metall-Nichtmetall-Verbindungen (Keramik).

Das erfindungsgemäße Verfahren zur Reparatur des Gasturbinenbauteils ermöglicht es, einen keramischen Verbundwerkstoff lokal zu erzeugen, ohne dass aufwendige Ofenbehandlungen notwendig sind. Zwar kann bei besonderem Bedarf das Bauteil einer Ofenbehandlung, bspw. einem Spannungsarmglühen, unterzogen werden, dies ist jedoch in der Regel nicht notwendig, da sich kleine Spannungen in den erfindungsgemäß reparierten Bauteilen durch die sehr hohen Temperaturen im Betrieb ohnehin schnell abbauen können. Ein besonderer Vorteil des entwickelten Verfahrens ist, dass Schrumpfspannungen reduziert werden können, die bei Standardverfahren (bspw. Sintern) zur Erzeugung von keramischen Verbundwerkstoffen nahezu unvermeidlich sind. Generell ist das erfindungsgemäße Verfahren einfach durchzuführen, da tatsächlich nur der beschädigte Bereich repariert wird und nicht das ganze Bauteil einem Sinter- oder Gießprozess unterworfen werden muss. Auch muss das Bauteil nicht neu infiltriert werden, sondern durch erfindungsgemäßes Zuführen der Fasern in die Schmelzzone, in der die Keramik gebildet wird, kann der keramische Verbundwerkstoff lokal direkt erzeugt werden.

Erfindungsgemäß reagieren der eingebrachte Zusatzstoff bzw. die eingebrachten Zusatzstoffe in der Schmelzzone vollständig oder zum Teil in einer chemischen Reaktion zu einer Keramik. Die dazu benötigten Komponenten, beispielsweise ein Metall wie Silizium und ein Nichtmetall wie Kohlenstoff, werden in einem stöchiometrischen Verhältnis als Zusatzstoffe in die Schmelzzone eingebracht und reagieren dann zu der gewünschten Keramik, in diesem Fall Siliziumcarbid. Dabei wird vorzugsweise ein um 20-40% höherer Anteil des Metalls vorgesehen, als stöchiometrisch nötig wäre, um alles Nichtmetall vollständig reagieren zu lassen. Der Grund hierfür ist, dass erreicht werden soll, dass der Kohlenstoff vollständig reagiert und nicht aufgrund von lokalem Siliziummangel elementar in der Fügezone verbleibt. Ein Überbleiben von Silizium wird dabei billigend in Kauf genommen, da es sogar positive Auswirkungen auf die Werkstoffeigenschaften haben kann, da viele klein verteilte Siliziumeinschlüsse in der Keramikmatrix die Duktilität und Risszähigkeit der Fügezone positiv beeinflussen können. Während die Zusatzstoffe reagieren, umschließen sie idealer Weise die in der Schmelze freiliegenden nicht aufgeschmolzenen Fasern und/oder Partikel des Grundwerkstoffmaterials und die zusätzlich eingebrachten Fasern und/oder Partikel gleichermaßen, so dass nach der chemischen Reaktion das neue Material fest mit dem Grundwerkstoff verbunden ist. Von besonderem Vorteil ist dabei, dass nicht nur eine Verbindung zwischen zwei Matrixwerkstoffen erreicht wird, sondern dass alte und neue Fasern und/oder Partikel in das zu Keramik reagierende Schmelzbad hineinragen, wodurch erfindungsgemäß eine besonders hochwertige Verbindung geschaffen wird. Generell bezeichnet eine Matrix ein zusammenhängendes Material oder Phase, das nicht zusammenhängende andere Phasen und/oder Partikel und/oder Fasern des gleichen oder eines anderen Materials enthält.

Vorzugsweise kann der eingebrachte Zusatzstoff bzw. die eingebrachten Zusatzstoffe die zu schaffende Keramik bereits enthalten. Der der Schmelzzone zugeführte Zusatzstoff bzw. die Zusatzstoffe werden durch den Energiestrahl vollständig oder zum Teil über den Schmelzpunkt hinaus erhitzt. Das dabei entstehende Schmelzbad ist durch seine flüssige Natur in der Lage, die Fasern und/oder Partikel des Grundwerkstoffs und die neu eingebrachten Fasern und/oder Partikel zu umfließen und nach seinem Erstarren den Grundwerkstoff mit den zusätzlich eingebrachten Werkstoffen zu verbinden. Vorzugsweise sind der eingebrachte Zusatzstoff und die zusätzlich eingebrachten Fasern und/oder Partikel dabei aus der gleichen Materialkombination wie der Grundwerkstoff, das heißt der Zusatzstoff bzw. die Zusatzstoffe und/oder die Fasern und/oder die Partikel werden so ausgewählt, dass sie den gleichen keramischen Verbundwerkstoff schaffen, aus der auch das Gasturbinenbauteil vorwiegend besteht. Durch die Artgleichheit der Verbindungspartner ist die entstehende Verbindung besonders einfach zu realisieren (gleiche Eigenschaften wie z.B. der Schmelzpunkt erleichtern den Prozess), und außerdem ist die Qualität der Verbindung besonders hoch. So sind beispielsweise die gleichen Wärmeausdehnungskoeffizienten sehr vorteilhaft, um thermische Spannungen der Verbindung zu minimieren, was besonders bei Anwendungen im Turbinenbereich von übergeordneter Bedeutung ist.

Vorzugsweise werden der eingebrachte Zusatzstoff bzw. die eingebrachten Zusatzstoffe und/oder die Fasern und/oder die Partikel vordeponiert und/oder über eine oder mehrere Zuführungen der Reaktionsenergie zugeführt. Ein Vordeponieren der Zusatzstoffe und/oder der Fasern und/oder der Partikel an der Reparaturstelle kann in manchen Fällen Vorteile aufweisen, in der Regel werden die Zusatzstoffe und/oder die Fasern und/oder die Partikel aber bevorzugt über eine Zuführung koaxial oder seitlich zum Energiestrahl zugeführt. Dies hat den Vorteil, dass in allen Lagen gearbeitet werden kann und bei einer geregelten Zuführung die Zusatzstoffe und/oder Fasern und/oder Partikel definiert in die Fügezone eingebracht werden können. Besonders definiert und geregelt kann dies geschehen, wenn zur Zuführung der Zusatzstoffe und/oder der Fasern und/oder der Partikel ein Fülldraht vorgesehen ist. Dieser Fülldraht enthält die notwendigen Materialien in geeigneter Menge und Zusammensetzung. Ein Fülldraht hat den Vorteil, dass die Zuführung von allen benötigten Komponenten über eine einzige Zuführung erreicht werden kann. Je nach Bedarf enthält der Fülldraht beispielsweise Silizium und Kohlenstoff sowie Siliziumcarbidfasern, und wird eingesetzt, um ein Bauteil aus einem keramischen Siliziumcarbidverbundwerkstoff zu reparieren. Dabei können auch sehr kleine Fasern einfach zugeführt werden, deren Zuführung sonst aufgrund ihrer Lungengängigkeit problematisch und mit Aufwand verbunden ist, aber auch Endlosfasern können problemlos zugeführt werden, da der Fülldraht in seiner Länge nicht beschränkt ist. Eine solche definierte Zuführung von Fasern in beliebiger Länge und Durchmesser zum Reparieren von keramischen Faserverbundwerkstoffen über reagierende Zusatzwerkstoffe ermöglicht vielseitige Reparaturmöglichkeiten. So ist es auch möglich, Risse in Gasturbinenbauteilen aus keramischen Faserverbundwerkstoffen mit dem erfindungsgemäßen Verfahren zu schließen und eine solche Schwachstelle, z.B. durch mehrere Lagen übereinander, zu verstärken. Auch ist es möglich, zwei Bauteile miteinander zu verbinden, indem bspw. die Schmelzzone und damit der Fügebereich genau in den Bereich gelegt wird, in dem sich die Bauteile berühren.

Der Aufbau des Fülldrahtes ist vorzugsweise so gewählt, dass der Fülldraht einen Außenmantel umfasst, wobei der Werkstoff des Außenmantels selbst einen oder mehrere Zusatzstoffe umfassen kann, und der Außenmantel einen Innenbereich umgibt, wobei im Innenbereich Zusatzstoffe und/oder Fasern und/oder Partikel vorgesehen sind. Ein solcher Fülldraht hat den Vorteil, dass der Außenmantel nicht nur als strukturelles Element dient, sondern auch gleichzeitig die Rolle der Zusatzstoffe übernehmen kann. Dadurch wird Material eingespart und es verbleiben keine Verunreinigungen im Bauteil, die durch einen Fülldraht ohne Zusatzwerkstoffaußenmantel entstanden wären. Der Innenbereich des Fülldrahtes ist mit den verschiedenen Zusatzstoffen und Fasern gefüllt, wobei die Zusatzstoffe beispielsweise in Form von Blech, Pulver, Paste oder Fasern vorliegen. Dabei ist die Menge und Art der Zusatzwerkstoffe auf den jeweiligen Bedarf abgestimmt und es ist gewährleistet, dass immer eine kontinuierliche Menge an Zusatzwerkstoffen und/oder Fasern und/oder Partikeln der Schmelzzone zugeführt wird, was bspw. durch Vordeponieren nicht immer sichergestellt werden kann, da dort die Komponenten nicht immer in dem gewünschten Verhältnis lokal vorhanden sind. Die Zuführung von vordeponiertem Material in das Schmelzbad erfolgt dadurch, dass das durch den Energiestrahl erzeugte Schmelzbad zusammen mit dem Energiestrahl auf einem definierten Pfad über das Gasturbinenbauteil geführt wird und auf diesem Pfad Material vordeponiert ist, welches durch den Energiestrahl aufgeschmolzen wird und dadurch dem Schmelzbad zugeführt wird. Bei so einer Vordeponierung kann es passieren, dass Fasern und/oder Partikel in dem vordeponierten Faser/Pulver Gemisch, nicht gleichmäßig verteilt vorliegen, sondern sich in einem Bereich anhäufen (bspw. durch Dichteunterschiede oder Agglomerationseffekte), und der aus einem solchen Gemisch gebildete keramische Verbundwerkstoff dann entsprechend nicht überall die gewünschten Materialeigenschaften hat, also Schwachstellen aufweisen könnte.

Vorzugsweise ist im Innenbereich des Fülldrahtes ein Gasstrom vorgesehen, der vorzugsweise dazu genutzt wird, ein Schutzgas und/oder Reaktionsgas für das Reparaturverfahren bereitzustellen. Je nach Bauteilwerkstoff und der zu schaffenden Keramik kann es nötig oder hilfreich sein, ein Schutzgas oder ein Reaktionsgas bereitzustellen. Beispielsweise könnte Argon als Schutzgas die Fügezone vom Luftsauerstoff abschirmen oder, in einem anderen Fall, zusammen mit Methan zum Deponieren von Kohlenstoff verwendet werden.

Vorzugsweise ist der Energiestrahl als Laserstrahl ausgeführt.

Der Vorteil eines Laserstrahls ist, dass der Prozess nicht unter Vakuum durchgeführt werden muss und die Schmelzzone durch die geringe Streuung des Laserstrahls sehr definiert gebildet werden kann. Der Energiestrahl kann bevorzugt auch als Elektronenstrahl ausgeführt sein, welches für bestimmte Anwendungen vorteilhaft sein kann. Des Weiteren kann der Energiestrahl auch bevorzugt als Induktionsfeld ausgeführt sein. In diesem Fall wird der Energiestrahl im Bauteil durch das Induktionsfeld induziert, was sich besonders für keramische Verbundwerkstoffe eignet, die leitende Fasern oder Partikel enthalten.

Nachfolgend wird die Erfindung anhand von konkreten Ausführungsbeispielen unter Zuhilfenahme von Figuren näher erläutert. In den Figuren ist im Einzelnen zu erkennen:
- Fig. 1:: Schematische Darstellung der erfindungsgemäßen Vorrichtung.
- Fig. 2:: Darstellung einer erfindungsgemäßen Reparatur eines Gasturbinenbauteils aus keramischem Faserverbundwerkstoff.
- Fig. 3:: Schnitt AA des Gasturbinenbauteils aus der Fig. 2.
- Fig. 4:: Schematischer Aufbau des erfindungsgemäßen Fülldrahtaufbaus.
- Fig. 5:: Schnitt BB des Fülldrahtes aus Fig. 4.

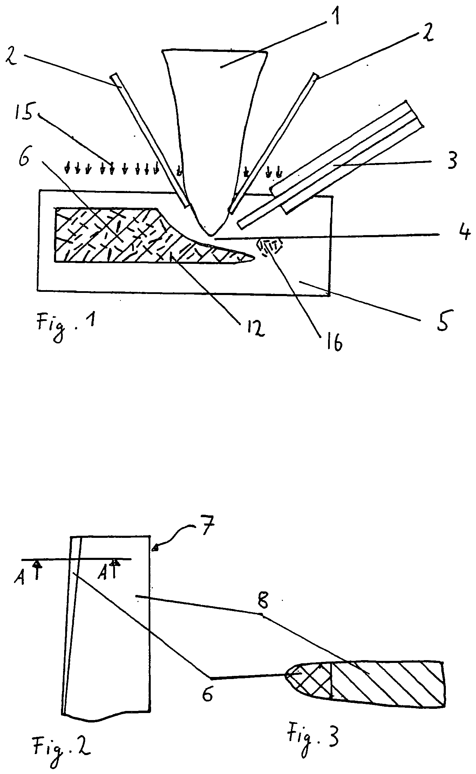

In der Fig. 1 ist die erfindungsgemäße Vorrichtung zur Durchführung des Verfahrens dargestellt. Es ist ein Energiestrahl 1 zu erkennen, welcher auf eine zu bearbeitende Grundwerkstoffoberfläche 5 gerichtet ist. Dadurch wird der Grundwerkstoff lokal in einer Zone, die hier als Schmelzzone 4 ausgeführt ist, thermisch aktiviert, also erwärmt und/oder aufgeschmolzen, so dass eine Benetzung durch Schmelzen oder Schmelzprodukte erfolgen kann. In diese Schmelzzone 4 wird über eine seitliche Zuführung 3 und/oder über eine symmetrische oder koaxiale Zuführung 2 Material zugeführt. Wahlweise kann der Schmelzzone 4 dieses Material auch ergänzend oder ausschließlich über eine Vordeponierung 16 zugeführt werden. Der Schmelzzone 4 kann dabei auch ein Prozessgas 15 (z.B. Sauerstoff, Methan, Argon) zugeführt werden, wahlweise kann auch die vorhandene Umgebungsatmosphäre (z.B. Luftsauerstoff und/oder -stickstoff) prozessfördernd (z.B. zur Oxid-/Nitridbildung) genutzt werden. Ziel ist es, durch die Materialzufuhr, wahlweise in Verbindung mit Gaszufuhr, einen keramischen Faserverbundwerkstoff 6 zu schaffen, um bspw. das in der Fig. 2 dargestellte Gasturbinenbauteil 7 zu reparieren.

Das in der Fig. 2 dargestellte Gasturbinenbauteil 7 kann beispielsweise eine Einzelschaufel mit Schaufelfuß oder auch eine Schaufel auf einem integralen Bauteil (Blisk oder Vane Cluster) sein. Das Gasturbinenbauteil 7 ist durch den Betrieb an der Strömungseintrittsseite verschlissen und beschädigt, so dass durch das erfindungsgemäße Reparaturverfahren ein keramischer Faserverbundwerkstoff 6 zur Verstärkung auf den Grundkörper 8 des Gasturbinenbauteils 7 aufgetragen wurde, um die Ausgangsschaufelgeometrie wiederherzustellen. Zur Verdeutlichung ist ein Schnitt AA durch das Gasturbinenbauteil 7 in der Fig. 3 dargestellt.

In der Fig. 3 ist besonders deutlich zu sehen, wie der vorhandene Grundkörper 8 an den neu aufgetragenen keramischen Faserverbundwerkstoff 6 angrenzt. Durch das erfindungsgemäße Verfahren ist es möglich, verschlissene Gasturbinenbauteile, die aus keramischen Faserverbundwerkstoffen bestehen, wieder zu reparieren. Der große Vorteil im erfindungsgemäßen Verfahren liegt darin begründet, dass es vergleichsweise einfach und kostengünstig ist, da tatsächlich nur der beschädigte Bereich repariert wird und nicht das ganze Gasturbinenbauteil 7 einem Sinter- oder Gießprozess unterworfen werden muss. Auch muss das Gasturbinenbauteil 7 nicht neu infiltriert werden. Vielmehr ist es möglich, durch das erfindungsgemäße Zuführen der Fasern 12 in die Schmelzzone 4 die Keramik in der ursprünglichen Zusammensetzung und Beschaffenheit oder in alternativen Ausführungen lokal neu zu bilden, so dass der keramische Faserverbundwerkstoff 6 lokal direkt erzeugt werden kann. Dadurch kann in bestimmten Fällen auch eine Reparatur "on-wing" durchgeführt werden, also ohne dass Gasturbinenbauteile 7 aus der Gasturbine ausgebaut werden müssen. Durch diesen stark reduzierten Prozessaufwand ist das beschriebene Verfahren sehr viel wirtschaftlicher als bekannte Reparaturverfahren von keramischen Faserverbundwerkstoffen.

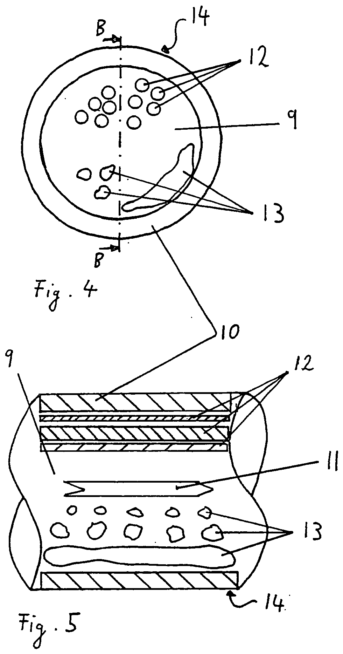

In der Fig. 4 ist der Aufbau des erfindungsgemäßen Fülldrahtes 14 zu sehen. Der eingezeichnete Schnitt BB ist in der Fig. 5 dargestellt. Der Fülldraht 14 enthält Fasern 12 und Zusatzstoffe 13, die in verschiedenen Formen, Größen und Mengen vorliegen können. Nicht dargestellt sind Partikel, die aber auch erfindungsgemäß im Fülldraht enthalten sein können, vorzugsweise dann, wenn ein partikelverstärkter keramischer Verbundwerstoff repariert wird. Die Länge der Fasern 12 kann beispielsweise einige wenige Mikrometer betragen, oder aber auch beliebig lang sein (sog. Endlosfasern). Die Zusatzstoffe 13 können in Form von kleinen Blechen, als Pulver oder auch Pasten vorliegen. Umgeben wird der Innenbereich 9, in dem die meisten Fasern 12 und Zusatzstoffe 13 vorgesehen sind, von einem Außenmantel 10, der selbst auch als Zusatzstoff 13 ausgeführt werden kann. Darüber hinaus kann im Innenbereich 9 auch ein Gasstrom 11 vorgesehen sein, über den Schutz- und/oder Prozessgase 15 über den Fülldraht 14 zur Reparaturstelle geleitet werden können.

Durch das Zuführen der Zusatzstoffe 13 in die vom Energiestrahl 1 erzeugte Schmelzzone 4 wird in der Schmelzzone eine Keramik geschaffen, die zusammen mit zusätzlich zugeführten Fasern 12 einen keramischen Faserverbundwerkstoff 6 bildet. Die dazu benötigten Komponenten, beispielsweise ein Metall wie Silizium und ein Nichtmetall wie Kohlenstoff, werden in einem stöchiometrischen Verhältnis als Zusatzstoffe 13 in die Schmelzzone 4 eingebracht und reagieren dann zu der gewünschten Keramik, in diesem Fall Siliziumcarbid. Ein wahlweise erhöhter Siliziumanteil von 20-40% sorgt für eine vollständige Reaktion des Kohlenstoffs, was bei einem rein stöchiometrischen Verhältnis nicht immer erreicht werden kann, da dort nicht davon auszugehen ist, dass allem Kohlenstoff in naher Umgebung auch Silizium zur Reaktion zur Verfügung steht. Das überschüssige Silizium verbleibt dabei idealer Weise in fein verteilten Siliziumeinschlüssen und kann dem erzeugten keramischen Faserverbundwerkstoff 6 dadurch zusätzlich zu einer verbesserten Duktilität verhelfen.

Der erfindungsgemäße Fülldraht 14 eröffnet dabei eine ganze Reihe von Möglichkeiten zur Reparatur von Gasturbinenbauteilen. Der Fülldraht 14 kann je nach Bedarf individuell gestaltet sein, um so den verschiedenen Anforderungen der verschiedenen Faser- und Matrixkombinationen gerecht zu werden. Diese Möglichkeit zur individuellen Komposition, zur Wahl der Menge der Zusatzstoffe 13, der Fasern und auch des Schutz- und Prozessgases 15 erlaubt die einfache Anwendung und Adaption des erfindungsgemäßen Verfahrens und der erfindungsgemäßen Vorrichtung auf vorhandene und zukünftige Gasturbinenbauteile aus keramischen Faserverbundwerkstoffen.

### Bezugszeichenliste

- 1: Energiestrahl
- 2: Koaxiale Zuführung
- 3: Seitliche Zuführung
- 4: Schmelzzone
- 5: Grundwerkstoffoberfläche
- 6: Keramischer Faserverbundwerkstoff
- 7: Gasturbinenbauteil
- 8: Grundkörper
- 9: Innenbereich
- 10: Außenmantel
- 11: Gasstrom
- 12: Fasern
- 13: Zusatzstoffe
- 14: Fülldraht
- 15: Prozessgas
- 16: Vordeponierung

## Patentansprüche

1. Verfahren zur Reparatur eines Gasturbinenbauteils (7), welches zumindest an der zu reparierenden Stelle aus einem keramischen Verbundwerkstoff besteht, wobei ein Energiestrahl (1), der auf eine zu bearbeitende Oberfläche (5) des Gasturbinenbauteils (7) gerichtet wird, das Gasturbinenbauteil (7) an einer Zone lokal erwärmt und dass an dieser Zone ein oder mehrere Zusatzstoffe (13) und Fasern (12) und/oder Partikel zugeführt werden, wobei durch diesen Zusatzstoff (13) bzw. diese Zusatzstoffe (13) eine Keramik in der Schmelzzone (4) geschaffen wird, die zusammen mit den zugeführten Fasern (12) und/oder Partikeln einen keramischen Verbundwerkstoff (6) bildet, **dadurch gekennzeichnet, dass** der eingebrachte Zusatzstoff (13) bzw. die eingebrachten Zusatzstoffe (13) in der Zone vollständig oder zum Teil in einer chemischen Reaktion zu einer Keramik reagieren.

2. Verfahren nach Anspruch 1, **dadurch gekennzeichnet, dass** die Zusatzstoffe (13) ein Metall und ein Nichtmetall umfassen, welche in der chemischen Reaktion zu einer Keramik reagieren und wobei der Anteil des Metalls höher als der des Nichtmetalls ist.

3. Verfahren nach Anspruch 2, **dadurch gekennzeichnet, dass** der Anteil des Metalls 20-40% höher als der des Nichtmetalls ist.

4. Verfahren nach Anspruch 1, **dadurch gekennzeichnet, dass** der eingebrachte Zusatzstoff (13) bzw. die eingebrachten Zusatzstoffe (13) die zu schaffende Keramik enthalten.

5. Verfahren nach einem der vorangegangenen Ansprüche,
**dadurch gekennzeichnet, dass** der Zusatzstoff (13) bzw. die Zusatzstoffe (13) und/oder die Fasern (12) und/oder die Partikel so ausgewählt werden, dass sie den gleichen kera mischen Verbundwerkstoff (6) schaffen, aus dem auch das Gasturbinenbauteil (7) vorwiegend besteht.

6. Verfahren nach einem der vorangegangenen Ansprüche,
**dadurch gekennzeichnet, dass** der eingebrachte Zusatzstoff (13) bzw. die eingebrachten Zusatzstoffe (13) und/oder die Fasern (12) und/oder die Partikel vordeponiert, und/oder über eine oder mehrere Zuführungen (2,3) zum Energiestrahl zugeführt werden.

7. Verfahren nach einem der vorangegangenen Ansprüche,
**dadurch gekennzeichnet, dass** der Energiestrahl (1) als Laserstrahl ausgeführt ist.

8. Verfahren nach einem der vorangegangenen Ansprüche,
**dadurch gekennzeichnet, dass** der Energiestrahl (1) als Elektronenstrahl ausgeführt ist.

9. Verfahren nach einem der vorangegangenen Ansprüche,
**dadurch gekennzeichnet, dass** der Energiestrahl (1) als Induktionsfeld ausgeführt ist.

10. Vorrichtung zur Durchführung eines Verfahrens nach einem der vorangegangenen Ansprüche, **dadurch gekennzeichnet, dass** zur Zuführung der Zusatzstoffe (13) und/oder der Fasern (12) ein Fülldraht (14) vorgesehen ist.

11. Vorrichtung nach Anspruch 10, **dadurch gekennzeichnet, dass** der Fülldraht (14) einen Außenmantel (10) umfasst, wobei der Werkstoff des Außenmantels (10) selbst einen oder mehrere Zusatzstoffe (13) umfassen kann, und der Außenmantel (10) einen Innenbereich (9) umgibt, wobei im Innenbereich (9) Zusatzstoffe (13) und/oder Fasern (12) und/oder Partikel vorgesehen sind.

12. Vorrichtung nach Anspruch 10 oder 11, **dadurch gekennzeichnet, dass** im Innenbereich (9) des Fülldrahtes (14) ein Gasstrom (11) vorgesehen ist, der vorzugsweise dazu genutzt wird, ein Schutzgas und/oder Reaktionsgas (15) für das Reparaturverfahren bereitzustellen.

## Claims

1. Method for repairing a gas turbine component (7), which at least at the spot to be repaired consists of a ceramic composite material, wherein an energy beam (1) which is directed onto a surface (5) to be processed of the gas turbine component (7) locally heats the gas turbine component (7) in one zone, and one or more auxiliary materials (13) and fibers (12) and/or particles are fed to this zone, wherein a ceramic is generated in the melting zone (4) through this auxiliary material (13) or these auxiliary materials (13), which together with the fed fibers (12) and/or particles forms a ceramic composite material (6), **characterized in that** the fed auxiliary material (13) or the fed auxiliary materials (13) completely or partially react to a ceramic in a chemical reaction in said zone.

2. Method according to claim 1, **characterized in that** the auxiliary materials (13) include a metal and a non-metal, which in the chemical reaction react to a ceramic, and wherein the proportion of the metal is higher than the proportion of the non-metal.

3. Method according to claim 2, **characterized in that** the proportion of the metal is 20 to 40 % higher than the proportion of the non-metal.

4. Method according to claim 1, **characterized in that** the fed auxiliary material (13) or the fed auxiliary materials (13) contain the ceramic to be generated.

5. Method according to any one of the preceding claims, **characterized in that** the auxiliary material (13) or the auxiliary materials (13) and/or the fibers (12) and/or the particles are chosen in such a way that they generate the same ceramic composite material (6), of which the gas turbine component (7) also mainly consists.

6. Method according to any one of the preceding claims, **characterized in that** the fed auxiliary material (13) or the fed auxiliary materials (13) and/or the fibers (12) and/or the particles are pre-deposited and/or are fed via one or more feeders (2, 3) to the energy beam.

7. Method according to any one of the preceding claims, **characterized in that** the energy beam (1) is realized as a laser beam.

8. Method according to any one of the preceding claims, **characterized in that** the energy beam (1) is realized as an electron beam.

9. Method according to any one of the preceding claims, **characterized in that** the energy beam (1) is realized as an induction field.

10. Device for carrying out a method according to any one of the preceding claims, **characterized in that** a flux cored wire (14) is provided for feeding the auxiliary materials (13) and/or the fibers (12).

11. Device according to claim 10, **characterized in that** the flux cored wire (14) comprises an outer sheath (10), wherein the material of the outer sheath (10) itself can include one or more auxiliary materials (13), and the outer sheath (10) encloses an interior (9), wherein auxiliary materials (13) and/or fibers (12) and/or particles are provided in the interior (9).

12. Device according to claim 10 or 11, **characterized in that** a gas stream (11) is provided in the interior (9) of the flux cored wire (14), which is preferably used to provide a protective gas and/or reactant gas (15) for the repair method.

## Revendications

1. Procédé de réparation d'un composant de turbine à gaz (7), qui est constitué, au moins à l'endroit à réparer, d'une matière composite céramique, dans lequel un faisceau d'énergie (1) qui est dirigé sur une surface (5) à traiter du composant de turbine à gaz (7) échauffe le composant de turbine à gaz (7) localement à une zone, et en ce qu'à cette zone, un ou plusieurs additifs (13) et des fibres (12) et/ou des particules sont amenés, dans lequel une céramique est créée dans la zone de fusion (4) en raison de cet additif (13) ou de ces additifs (13), qui, en conjonction avec les fibres (12) amenées et/ou les particules, forme une matière composite (6) céramique, **caractérisé en ce que** l'additif (13) introduit ou les additifs (13) introduits réagissent dans la zone, totalement ou en partie, pendant une réaction chimique pour se transformer en une céramique.

2. Procédé selon la revendication 1, **caractérisé en ce que** les additifs (13) comprennent un métal et un non-métal, lesquels réagissent pendant la réaction chimique pour se transformer en une céramique et dans lequel procédé la proportion de métal est supérieure à celle du non-métal.

3. Procédé selon la revendication 2, **caractérisé en ce que** la proportion du métal est 20 à 40% supérieure à celle du non-métal.

4. Procédé selon la revendication 1, **caractérisé en ce que** l'additif (13) introduit ou les additifs (13) introduits contiennent la céramique à créer.

5. Procédé selon l'une quelconque des revendications précédentes, **caractérisé en ce que** l'additif (13) ou les additifs (13) et/ou les fibres (12) et/ou les particules sont sélectionnés de manière à créer la même matière composite (6) céramique à partir de laquelle le composant de turbine à gaz (7) est principalement constitué.

6. Procédé selon l'une quelconque des revendications précédentes, **caractérisé en ce que** l'additif (13) introduit ou les additifs (13) introduits et/ou les fibres (12) et/ou les particules sont pré-déposés et/ou amenés vers le faisceau d'énergie par l'intermédiaire d'un ou de plusieurs dispositifs d'alimentation (2, 3).

7. Procédé selon l'une quelconque des revendications précédentes, **caractérisé en ce que** le faisceau d'énergie (1) est réalisé comme faisceau laser.

8. Procédé selon l'une quelconque des revendications précédentes, **caractérisé en ce que** le faisceau d'énergie (1) est réalisé comme faisceau électronique.

9. Procédé selon l'une quelconque des revendications précédentes, **caractérisé en ce que** le faisceau d'énergie (1) est réalisé comme champ à induction.

10. Dispositif destiné à la réalisation d'un procédé selon l'une quelconque des revendications précédentes, **caractérisé en ce qu'**un fil fourré (14) est ménagé pour l'alimentation des additifs (13) et/ou des fibres (12).

11. Dispositif selon la revendication 10, **caractérisé en ce que** le fil fourré (14) comprend une enveloppe extérieure (10), dans lequel la matière de l'enveloppe extérieure (10) peut comprendre elle-même un ou plusieurs additifs (13) et dans lequel l'enveloppe extérieure (10) entoure une zone intérieure (9), dans lequel des additifs (13) et/ou des fibres (12) et/ou des particules sont ménagés dans la zone intérieure (9).

12. Dispositif selon la revendication 10 ou 11, **caractérisé en ce qu'**un flux de gaz (11) est ménagé dans la zone intérieure (9) du fil fourré (14), lequel est de préférence utilisé pour fournir un gaz de protection et/ou un gaz de réaction (15) pour le procédé de réparation.
